# EUROPÄISCHE PATENTSCHRIFT

(11) **EP 0 612 451 B1**
(45) Veröffentlichungstag und Bekanntmachung des Hinweises auf die Patenterteilung: **07.06.2000**
(21) Anmeldenummer: 93920740.3
(22) Anmeldetag: 16.09.1993
(51) Int. Cl.: H04B 10/12

(54) **EINRICHTUNG FÜR DIE ERZEUGUNG VON RÜCKKOPPLUNGSSIGNALEN ZUR REGELUNG OPTISCHER ÜBERWACHUNGSKREISE (PLL)**
SYSTEM FOR GENERATING FEEDBACK SIGNALS FOR REGULATING OPTICAL SURVEILLANCE CIRCUITS (PLL)
DISPOSITIF POUR PRODUIRE DES SIGNAUX DE RETROACTION POUR LA REGULATION DE CIRCUITS DE SURVEILLANCE OPTIQUES (PLL)

(30) Priorität: 16.09.1992 DE 4230932
(43) Veröffentlichungstag der Anmeldung: 31.08.1994
(73) Patentinhaber: DaimlerChrysler AG, 70567 Stuttgart (DE); GEC-Marconi Limited, Stanmore Middlesex HA7 4LY (GB)
(72) Erfinder: BIRKMAYER, Wolfram, D-8414 Maxhütte-Haidhof (DE); WALE, Michael, John 53 Bengal Lane, Towchester Northhamptonshire NN12 8BE (GB); EDGE, Colin, Northhamptonshire NN12 8EQ (GB)
(86) Internationale Anmeldenummer: EP9302505
(87) Internationale Veröffentlichungsnummer: WO9407312

(56) Entgegenhaltungen:
- EP-A- 0 280 075
- EP-A- 0 445 943
- IEEE GLOBAL TELECOMMUNICATIONS CONFERENCE AND EXHIBITION GLOBECOM '89 Bd. 1, Nr. 10.6 , 27. November 1989 , DALLAS,TEXAS,US Seiten 365 - 370 G. DE MARCHIS ET AL 'Phase-Noise and Polarization State Insensitive Coherent Optical Receiver'
- PATENT ABSTRACTS OF JAPAN vol. 15, no. 376 (P-1225)24. September 1991 & JP,A,03 148 641 (OKI ELECTRIC IND)
- PATENT ABSTRACTS OF JAPAN vol. 11, no. 194 (P-588)23. Juni 1987 & JP,A,62 017 737 (NEC)

## Beschreibung

Die Erfindung bezieht sich auf ein Verfahren zum Regeln der Trägersignale optischer Sender gemäß dem Oberbegriff des Anspruches 1 sowie auf eine entsprechende Vorrichtung gemäß dem Oberbegriff des Anspruches 3.

Durch die Druckschriften (1) Wale, M.J. and Birkmayer, W.S. 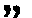 Coherent optical techniques in antenna beamforming for satellite communications", Colloquium on Optical Intersatellite Links and Onboard Techniques, IEEE, London, 12. Jan. 1990 (IEE Digest 1990/8), (2) Birkmayer, W.S. and Wale, M.J. 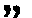 Optical BFN for telecom satellites and/or SAR applications; analysis and results", in Proc. ESA Workshop on Advanced Beamforming networks for Space Applications, November 1991, ESA publication WPP-030 sind solche optischen Einrichtungen bekanntgeworden. Figur 3 der Druckschrift (2) zeigt das Blockschaltbild des Demonstrators eines optischen Strahlformungsnetzwerkes, in dem der Anmeldegegenstand im Kombinierer benötigt und später angewendet wurde. Siehe auch den Kombinierer in Fig. 1 der Druckschrift (2). Im gezeigten Demonstrator wird ein optischer Bezugsträger LO mit zwei modulierten optischen Trägern TX1 und TX2 überlagert. Insbesondere erläutern die Druckschriften auch das Problem, das im Zusammenhang mit der Anwendung kohärenter optischer Verfahren für die Erzeugung und Steuerung mehrerer modulierter HF-Träger auftritt, z. B. bei der Bildung von Antennenkeulen bei phasengesteuerten Antennen. Zum weiteren Stand der Technik ist zu nennen: Wale, M.J., Holliday, M.G., Microwave Signal Generation using Optical Phased Locked Loops, 1991, 21st European Microwave Conference Workshop, 1991, pp. 78-82 (3).

Durch die Druckschrift IEEE Global Telecommunications Conference and - exhibition Globecom 89, Bd. 1, Nr. 10.6, 27. November 1989, Dallas, Texas, US - Seiten 365-370, ist eine optische Vorrichtung zum Regeln von Trägersignalen optischer Sender für die kohärente Erzeugung von modulierten HF-Signalen bekannt geworden, wobei ein optisches Trägersignal und ein optisches Bezugsträgersignal auf einem einzigen Wellenleiter durch einen Phasenmodulator übertragen wird.

Beim Anmeldungsgegenstand wird das Rückkoppelsignal FB getrennt (unabhängig) vom Nutzsignal generiert. Für die Anordnung mit einem HF-Träger wird das geforderte HF-Signal durch Mischen von zwei optischen Trägern mit den Frequenzen ω1, ω_{LO} erhalten, die durch die erforderliche Überlagerungsfrequenz ω_{RF} getrennt sind. Da jede Phasen- oder Amplitudengewichtung auf ω₁ oder ω_{LO} durch den Mischvorgang im optischen Empfänger direkt auf den HF-Träger mit Frequenz ω_{RF} übertragen wird, können Phasen- oder Amplitudengewichtung im optischen Bereich zur Steuerung der entsprechenden Eigenschaften des HF-Signales verwendet werden.

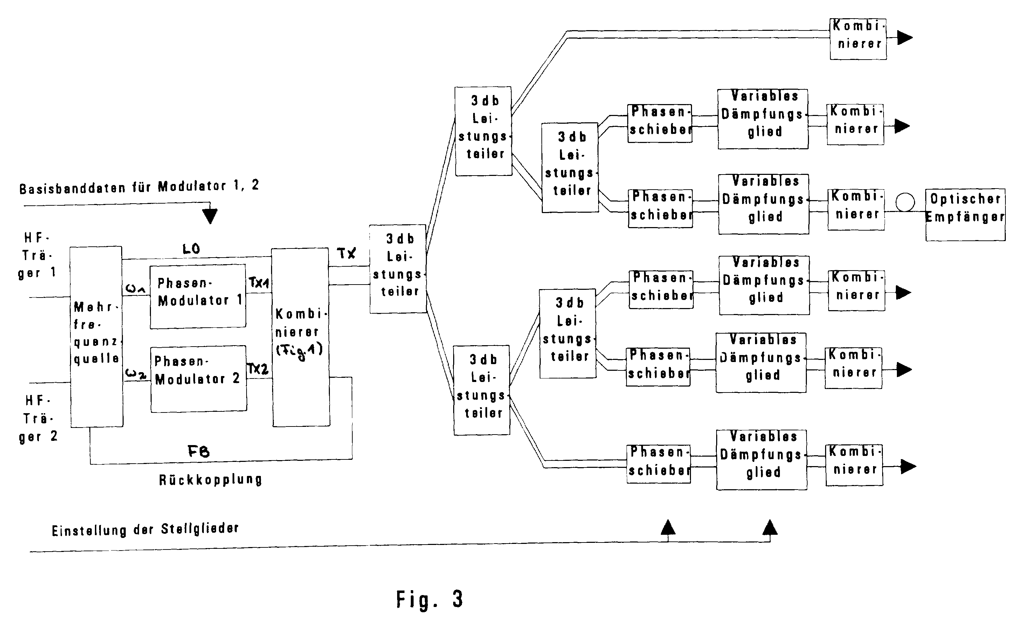

Daraus ergeben sich die in den vorgenannten Druckschriften angeführten Vorteile des beschriebenen Systems. Die grundlegende Konfiguration, so wie sie für die Steuerung von Phase und Amplitude bei mehreren HF-Trägern, jeweils moduliert mit Basisbanddaten und mehreren phasengesteuerten Antennenelementen verwendet wird, veranschaulicht Fig. 3. Für einen HF-Träger werden zwei optische Träger mit Frequenzen ω₁, ω_{LO} von einem Laserpaar erzeugt, das unter Kontrolle eines elektronischen Überwachungskreises (PLL) arbeitet. Dieser überwacht die relative Frequenz und/oder die Phase des HF-Trägers und sendet ein Rückkoppelsignal FB an einen oder beide Laser, so daß ein konstantes Frequenzverhältnis - in einigen Fällen auch ein konstantes Phasenverhältnis - zwischen dem gemessenen HF-Träger und einer Bezugsfrequenz von einem externen Steueroszillator aufrechterhalten wird.

Die oben erwähnten Druckschriften beschreiben eine Ausführungsform, die sich insbesondere mit der Bereitstellung eines optischen Ausgangs für den Meßvorgang befaßt, wobei dieser Ausgang bestimmte Eigenschaften aufweisen soll. Um eine genaue HF-Phasensteuerung zu ermöglichen, muß der Temperaturkoeffizient der Phase der am Ausgang anstehenden Differenzfrequenz so gering wie möglich sein und das Steuersignal muß einen anderen Weg nehmen als die Antennensignale, die unabhängig mit geringstmöglichem Aufwand gesteuert werden. Das Rückkoppelsignal FB soll nun nicht stark moduliert werden, da Datenmodulationsseitenbänder den Betrieb des Rückkopplungssteuerkreises der Laser für Phase/Frequenz stören und zu einer Kopplung zwischen Datenmodulation und der gesteuerten HF-Frequenz oder Phase führen. In dem besonderen Fall eines Modulationsschemas mit unterdrücktem Träger - wie QPSK - ist der Träger im Spektrum des modulierten Signals überhaupt nicht vorhanden und müßte im Lasersteuerkreis neu erzeugt werden, z.B. durch nichtlineare Signalverarbeitung. Dadurch muß jedoch die Elektronik sehr aufwendig konzipiert werden und trotzdem kann die Genauigkeit und Temperaturfestigkeit des Systems erheblich beeinträchtigt sein.

Der vorliegenden Erfindung liegt die Aufgabe zugrunde, ein Verfahren und eine Vorrichtung der eingangs genannten Art aufzuzeigen, bei denen der bisherige Aufwand an speziell konzipierten optischen und mechanischen Bauelementen und der Verbrauch von elektrischer Leistung erheblich reduziert und das Signalrauschverhältnis des Rückkoppelsignales FB drastisch verbessert ist.

Diese Aufgabe wird durch die in den Ansprüchen 1 und 3 aufgezeigten Maßnahmen gelöst. Anspruch 1 umfaßt ein Verfahren zum Regeln der Trägersignale optischer Sender für die kohärente optische Erzeugung modulierter, phasensteuerbarer HF-Signale, bei dem:
a) mehrere optische Trägersignale (TX1, TX2, ...) mit den Frequenzen ω₁, ω₁, ... simultan so zur Verfügung gestellt werden, daß jedes Trägersignal (TX1, TX2, ...) in einer Polarisationsrichtung moduliert und in der dazu orthogonalen Polarisationsrichtung nicht moduliert ist,
b) ein unmoduliertes optisches Bezugsträgersignal (LO) mit der Frequenz ω_{LO} zur Verfügung gestellt wird,
c) ein Rückkoppelsignal (FB) mit unterdrückter Modulation zum Rückkoppeln auf eine optische PLL-Schaltung erhalten wird durch Überlagerung derjenigen Komponenten der Trägersignale (TX1, TX2, ...) mit der Polarisationsrichtung, die nicht moduliert ist, mit dem Bezugsträgersignal (LO) mit der Frequenz ω_{LO}.

Anspruch 3 betrifft eine Vorrichtung zur Durchführung des Verfahrens zum Regeln der Trägersignale (TX1 TX2, ...) optischer Sender für die kohärente optische Erzeugung modulierter, phasensteuerbarer HF-Signale, wobei die Vorrichtung folgendes aufweist:
a) optische Sender zur simultanen Erzeugung optischer Trägersignale (TX1, TX2, ...) mit den Frequenzen ω₁, ω₂, ... und eines unmodulierten optischen Bezugsträgersignals (LO) mit der Frequenz ω_{LO},
b) Modulationseinrichtungen zur Modulation der Trägersignale (TX1, TX2, ...) in einer von zwei orthogonalen Polarisationsrichtungen,
c) eine Koppleranordnung zur Überlagerung derjenigen Komponenten der Trägersignale (TX1, TX2, ...) mit der Polarisationsrichtung, die nicht moduliert ist, mit dem Bezugsträgersignal (LO).

In den Unteransprüchen sind Ausgestaltungen und Weiterbildungen angegeben und in der nachfolgenden Beschreibung sind Ausführungsbeispiele erläutert und in den Figuren der Zeichnung skizziert, wobei diese Figuren die Erläuterungen ergänzen. Es zeigen:
- Fig. 1: eine Netzdarstellung der integrierten optischen Schaltung,
- Fig. 2: eine Netzdarstellung eines Ausführungsbeispieles der individuellen Phasen- und Amplitudensteuerung,
- Fig. 3: ein Blockschaltbild eines zum Stand der Technik beschriebenen Ausführungsbeispieles.

Der generelle Erfindungsgedanke sieht vor, bei der Realisierung der optischen Einrichtung einen reinen Trägerausgang ohne Modulation vorzusehen und hierzu die optischen Signale von zwei orthogonalen Polarisationen getrennt zu verarbeiten, wobei die optischen Verarbeitungsfunktionen unter Verwendung konventioneller Prismen, Polarisationsstrahlteiler und Polarisatoren oder mittels integrierter Optik durchführbar sind. Letztere ist besonders vorteilhaft in bezug auf Leistung, Robustheit und Stabilität gegen Umwelteinflüsse.

Hierbei wird einer der zwei orthogonalen Polarisationszustände dazu benützt, das optische Signal in nicht moduliertem Zustand zu übertragen und der andere dazu, den modulierten optischen Träger zu übertragen. Dies kann durch Verwendung einer integrierten optischen Vorrichtung - wie beispielsweise eines Phasenmodulators - erreicht werden, die nur eine Polarisationsrichtung moduliert. Hierzu wird eine Vorrichtung eingesetzt, die auf dem elektrooptischen Effekt in Halbleiterwerkstoffen der Hauptgruppe III-V, wie GaAs/AlGaAs, InP/LnGaAs oder InP/GaAsP, basiert. Dabei wird durch Verwendung eines vertikalen elektrischen Streufeldes in einem Hohlleiter, der z. B. auf einem Wafer mit Orientierung 〈001〉 gefertigt ist, die TE-polarisierte Welle durch den elektrooptischen Effekt τ₄₁ moduliert, während die TM-Welle keinerlei elektrooptische Modulation erfährt.

Hier ist noch zu erwähnen, daß andere, die TM-Mode beeinflussende Modulationseffekte, wie sie z. B. durch die Bewegung von Ladungsträgern entstehen, durch Wahl geeigneter Parameter bei der Auslegung der Vorrichtung gering gehalten werden können.

Um eine HF-Wellenform zu erhalten, überlagern wir das vom Modulator kommende optische Trägersignal TX1, TX2, ... mit dem Bezugsträgersignal LO und führen eine Polarisationsanalyse durch, um die gewünschte Signalkomponente zu isolieren, wobei zu berücksichtigen ist, daß nur die Komponente, die entlang einer gemeinsamen Polarisationsachse zerlegt wird, einen Überlagerungston erzeugt, denn es gibt keine optische Interferenz zwischen Signalen orthogonaler Polarisation. Daher sehen wir ein optisches Bezugsträgersignal LO mit Komponenten in beiden Polarisationen vor. Durch Auflösung der Polarisation entlang der TE-Achse des Modulators erhalten wir den datenmodulierten optischen Träger für die Signalübertragung, während durch Auflösung entlang der,TM-Achse das nichtmodulierte Rückkoppelsignal FB erhalten wird, der für die Frequenz- oder Phasensteuerung benutzbar ist.

Bei der Umsetzung der vorbeschriebenen Maßnahmen in die Praxis ist die Doppelbrechung der verwendeten Komponenten und insbesondere die Doppelbrechung der integrierten optischen Hohlleiter zu berücksichtigen, die möglichweise nicht in jedem Einzelfall präzise bestimmt werden kann. Bei Doppelbrechung würde das ein eingangs linear moduliertes Signal in einem solchen Schema gewöhnlich eine elliptische Polarisation annehmen und somit die Orthogonalität beeinträchtigen, die für die Ableitung von zwei unabhängigen Signalkomponenten erforderlich ist.

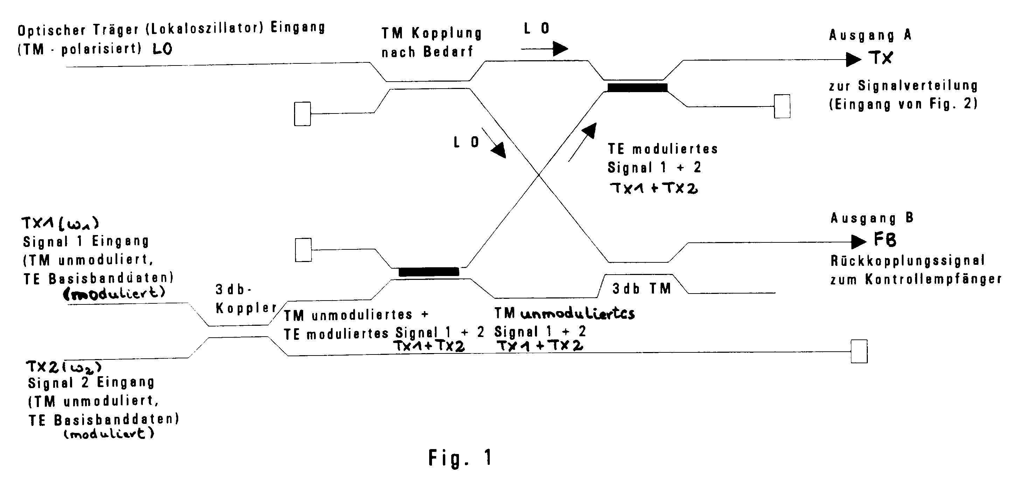

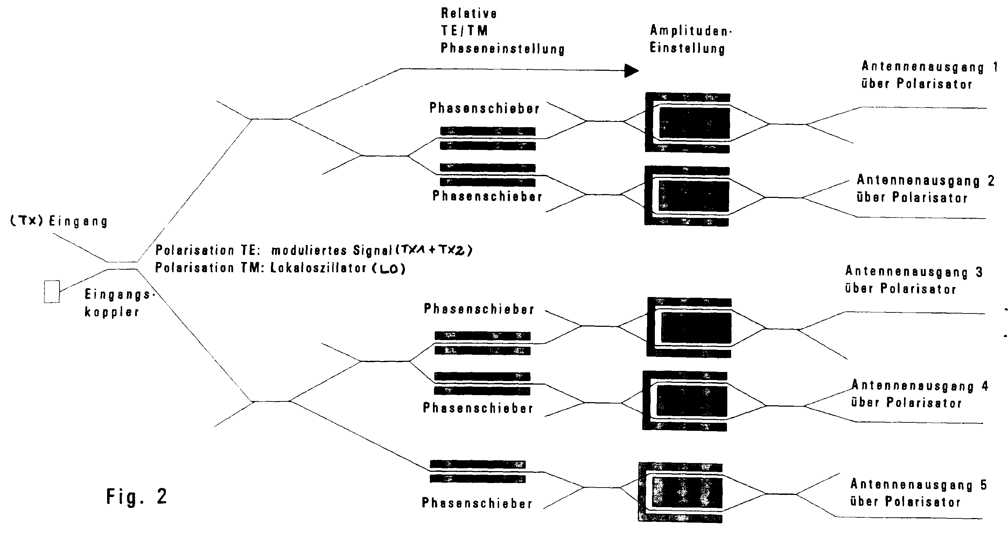

Der vorgenannte Nachteil wird bei dem in Fig. 1 dargestellten, etwas komplexeren Ausführungsbeispiel vermieden. Hier speist der obere Ausgang A die modulierten Signalkanäle, in denen eine individuelle Phasen- und Amplitudensteuerung erforderlich ist, wie sie beispielsweise in Fig. 2 gezeigt wird. Der Ausgang FB ist aufden optischen Empfänger gerichtet, der das nichtmodulierte Rückkoppelsignal FB für den Laser in der optischen phasengesteuerten Rückkopplungsschleife liefert. Die in dieser Fig. 2 dargestellte Konfiguration hat optionsweise einen symmetrischen Ausgang für einen Doppeldetektorempfänger, der zur Erreichung eines höheren Signalpegels an diesem Empfänger und zur gleichzeitigen Unterdrückung des Laserrauschens verwendet wird.

Das in der Fig. 1 gezeigte Netz wird als integrierter optischer Kreis aus einem geeigneten Medium, wie Lithiumniobat, GaAs, InP oder Silizium gefertigt. Um eine möglichst genaue Phasenführung zwischen Signalen orthogonaler Polarisation zu gewährleisten, ist es vorteilhaft ein Werkstoffsystem und eine Kristallorientierung zu verwenden, bei denen die Doppelbrechung des Basismaterials gleich Null ist, da in diesem Fall der Temperaturkoeffizient der Doppelbrechung ebenfalls sehr gering ist. Diese Bedingung wird beijeder Orientierung von GaAs, InP oder Silizium erfüllt, wie auch bei LiNbO₃ mit Schnitt in X-Richtung und Ausbreitungsorientierung Z.

Die für das in Fig. 1 gezeigte Netz erforderlichen grundlegenden Bauelemente der Vorrichtung sind Richtungskoppler und Polarisationsmodenteiler. Der Richtungskoppler ist das klassische passive Bauelement, wie allgemein bekannt, nur wird er hier als Strahlteiler mit dem erforderlichen Teilungsverhältnis verwendet. Die erforderliche Rotation von Signalpolarisationen zwischen der Modulatorvorrichtung am Netzeingang und dem Netz selbst kann durch eine Verbindungsfaser oder durch eine Polarisationsvorrichtung, die monolithisch in die anderen Elemente der Vorrichtung integriert ist, erreicht werden. Geeignete Rotationselemente sind allgemein erhältlich und weiterhin besteht die Möglichkeit, im vorbeschriebenen Ausführungsbeispiel alle benötigten Elemente in einem einzigen, integrierten optoelektronischen Schaltkreis zusammenzufassen.

## Patentansprüche

1. Verfahren zum Regeln der Trägersignale optischer Sender für die kohärente optische Erzeugung modulierter, phasensteuerbarer HF-Signale, **dadurch gekennzeichnet**, daß
a) mehrere optische Trägersignale (TX1, TX2, ...) mit den Frequenzen ω₁, ω₂, ... simultan so zur Verfügung gestellt werden, daß jedes Trägersignal (TX1, TX2, ...) in einer Polarisationsrichtung moduliert und in der dazu orthogonalen Polarisationsrichtung nicht moduliert ist,
b) ein unmoduliertes optisches Bezugsträgersignal (LO) mit der Frequenz ω_{LO} zur Verfügung gestellt wird,
c) ein Rückkoppelsignal (FB) mit unterdrückter Modulation zum Rückkoppeln auf eine optische PLL-Schaltung erhalten wird durch Überlagerung derjenigen Komponenten der Trägersignale (TX1, TX2, ...) mit der Polarisationsrichtung, die nicht moduliert ist, mit dem Bezugsträgersignal (LO) mit der Frequenz ω_{LO}.

2. Verfahren nach Anspruch 1, dadurch gekennzeichnet, daß zusätzlich eine separate Überlagerung derjenigen Komponenten der Trägersignale (TX1, TX2 ...) mit der modulierten Polarisationsrichtung mit dem Bezugsträgersignal (LO) erfolgt und die überlagerten Signale einem Ausgang zugeführt werden.

3. Vorrichtung zur Durchführung des Verfahrens nach Anspruch 1 oder 2 zum Regeln der Trägersignale (TX1, TX2, ...) optischer Sender für die kohärente optische Erzeugung modulierter, phasensteuerbarer HF-Signale, dadurch gekennzeichnet, daß die Vorrichtung folgendes aufweist:
a) optische Sender zur simultanen Erzeugung optischer Trägersignale (TX1, TX2, ...) mit den Frequenzen ω1, ω2, ... und eines unmodulierten optischen Bezugsträgersignals (LO) mit der Frequenz ω_{LO},
b) Modulationseinrichtungen zur Modulation der Trägersignale (TX1, TX2, ...) in einer von zwei orthogonalen Polarisationsrichtungen,
c) eine Koppleranordnung zur Überlagerung derjenigen Komponenten der Trägersignale (TX1, TX2, ...) mit der Polarisationsrichtung, die nicht moduliert ist, mit dem Bezugsträgersignal (LO).

4. Vorrichtung nach Anspruch 3, dadurch gekennzeichnet, daß die Koppleranordnung zusätzlich so ausgebildet ist, daß eine separate Überlagerung derjenigen Komponenten der Trägersignale (TX1, TX2, ...) mit der modulierten Polarisationsrichtung mit dem Bezugsträgersignal (LO) erfolgt und Mittel zur Verbindung der Kopplereinrichtung mit einem Ausgang vorgesehen sind.

5. Vorrichtung nach Anspruch 3 oder 4, dadurch gekennzeichnet, daß ein Phasen- oder ein Amplituden-Modulator angeordnet ist, dem ein einziger Wellenleiter oder eine optische Strecke zur Übertragung der optischen Trägersignale (TX1, TX2, ...) zusammen mit dem Bezugsträgersignal (LO) zugeordnet ist, wobei die Anordnung so getroffen ist, daß die Trägersignale (TX1, TX2, ...) senkrecht zum Bezugsträgersignal (LO) polarisiert sind.

6. Vorrichtung nach einem der Ansprüche 3 bis 5, dadurch gekennzeichnet, daß eine Einrichtung zur Erzeugung eines vertikales elektrischen Steuerfeldes in einem auf einem Wafer mit Orientierung 〈001〉 gefertigten Wellenleiter zur Modulation einer transversal-elektrisch (TE) polarisierten Welle durch den elektrooptischen Effekt τ₄₁ vorgesehen ist.

7. Vorrichtung nach einem der Ansprüche 3 bis 6, dadurch gekennzeichnet, daß dem Wellenleiter eine Einrichtung zur Erzeugung des optischen Bezugsträgersignals (LO) mit Komponenten in beiden Polarisationen zugeordnet ist.

8. Vorrichtung nach einem der Ansprüche 3 bis 7, dadurch gekennzeichnet, daß der Wellenleiter einen Antennenausgang aufweist, der optionsweise mit einem symmentrischen Ausgang für einen Doppeldetektorempfänger versehen ist.

9. Vorrichtung nach einem der Ansprüche 3 bis 8, dadurch gekennzeichnet, daß die Vorrichtung als Netz einer integrierten optischen Schaltung aus LiNbO₃, GaAs oder InP gefertigt ist und die Doppelbrechung des Basismaterials gleich Null ist.

10. Vorrichtung nach einem der Ansprüche 3 bis 9 dadurch gekennzeichnet, daß die Koppleranordnung Richtungskoppler umfaßt, die als Strahlteiler, gegebenenfalls mit asymmetrischem Metallüberzug, ausgebildet sind.

11. Vorrichtung nach einem der Ansprüche 3 bis 10, dadurch gekennzeichnet, daß zur Erzeugung einer Rotation von Signalpolarisationen zwischen der Modulationseinrichtung am Netzeingang und dem Netz eine Verbindungsfaser oder eine Polarisations-Rotationseinrichtung integriert ist.

## Claims

1. Method for regulating the carrier signals of optical transmitters for the coherent optical generation of modulated, phase-controllable HF-signals, characterised in that
a) a plurality of optical carrier signals (TX1, TX2) having the frequencies ω₁, ω₂, ... are simultaneously made available in such a way that each carrier signal (TX1, TX2) is modulated in one polarisation direction and is not modulated in the polarisation direction orthogonal thereto,
b) an unmodulated optical reference carrier signal (LO) having the frequency ω_{LO} is made available,
c) a feedback signal (FB) with suppressed modulation for feedback to an optical PLL circuit is obtained by superposition of those components of the carrier signals (TX1, TX2) that have the polarisation direction that is not modulated, with the reference carrier signal (LO) having the frequency ω_{LO}.

2. Method according to claim 1, characterised in that additionally, a separate superposition of those components of the carrier signals (TX1, TX2) that have the modulated polarisation direction with the reference carrier signal (LO) takes place and the superposed signals are supplied to an output.

3. Device for carrying out the method according to claim 1 or 2 for regulating the carrier signals (TX1, TX2) of optical transmitters for the coherent optical generation of modulated, phase-controllable HF-signals, characterised in that the device has the following:
a) optical transmitters for simultaneous generation of optical carrier signals (TX1, TX2) having the frequencies ω₁, ω₂, ... and an unmodulated reference carrier signal (LO) having the frequency ω_{LO},
b) modulation devices for modulation of the carrier signals (TX1, TX2) in one of two orthogonal polarisation directions,
c) a coupler arrangement for superposition of those components of the carrier signals (TX1, TX2) that have the polarisation direction that is not modulated, with the reference carrier signal (LO).

4. Device according to claim 3, characterised in that the coupler arrangement is additionally constructed in such a way that a separate superposition of those components of the carrier signals (TX1, TX2) that have the modulated polarisation direction with the reference carrier signal (LO) takes place and means are provided for connecting the coupler device to an output.

5. Device according to claim 3 or 4, characterised in that there is arranged a phase or amplitude modulator, to which is assigned a single waveguide or an optical channel for transmission of the optical carrier signals (TX1, TX2, ...) together with the reference carrier signal (LO), the arrangement being made in such a way that the carrier signals (TX1, TX2) are polarised at right angles to the reference carrier signal (LO).

6. Device according to one of claims 3 to 5, characterised in that there is provided a device for generating a vertical electrical control field in a waveguide produced on a wafer with 〈001〉 orientation for modulation of a transverse-electrically (TE) polarised wave by the electro-optical effect τ₄₁.

7. Device according to one of claims 3 to 6, characterised in that there is assigned to the waveguide a device for generating the optical reference carrier signal (LO) with components in both polarisations.

8. Device according to one of claims 3 to 7, characterised in that the waveguide has an antenna output which is optionally provided with a symmetrical output for a double detector receiver.

9. Device according to one of claims 3 to 8, characterised in that the device is produced as a network of an integrated optical circuit made of LiNbO₃, GaAs or InP and the double refraction of the base material is equal to zero.

10. Device according to one of claims 3 to 9, characterised in that the coupler arrangement comprises directional couplers which are constructed as beam splitters, possibly with asymmetrical metal coating.

11. Device according to one of claims 3 to 10, characterised in that for generation of a rotation of signal polarisations there is integrated between the modulation device at the network input and the network a connecting fibre or a polarisation rotation device.

## Revendications

1. Procédé pour réguler les signaux porteurs d'émetteurs optiques pour générer de manière optiquement cohérente des signaux HF modulés, commandés en phase, caractérisé en ce qu'
a) on fournit plusieurs signaux porteurs optiques (TX1, TX2, ...) à des fréquences (ω₁, ω₂, ...) simultanément pour que chaque signal porteur (TX1, TX2, ...) soit modulé dans une direction de polarisation et ne le soit pas dans la direction de polarisation orthogonale,
b) on fournit un signal porteur de référence optique (LO), non modulé à la fréquence (ω_{LO}) ,
c) on obtient dans un circuit PLL optique un signal de rétroaction (FB) avec suppression de modulation pour la rétroaction, par combinaison des composants des signaux de porteur (TX1, TX2,...) à direction de polarisation non modulée, avec le signal porteur de référence (LO) à la fréquence (ω_{LO}).

2. Procédé selon la revendication 1,
caractérisé en ce qu'
en plus on réalise une combinaison distincte des composants respectifs des signaux porteurs (TX1, TX2,...) à direction de polarisation modulée avec le signal porteur de référence (LO) et on applique les signaux combinés à une sortie.

3. Dispositif pour la mise en oeuvre du procédé selon la revendication 1 ou 2, pour réguler les signaux porteurs (TX1, TX2,...) d'émetteurs optiques pour générer de manière optiquement cohérente des signaux HF modulés, commandés en phase,
caractérisé en ce qu'
il comprend les moyens suivants :
a) un émetteur optique pour générer simultanément des signaux porteurs optiques (TX1, TX2,...) aux fréquences (ω₁, ω₂,...) et un signal porteur de référence (LO), optique non modulé à la fréquence (ω_{LO}),
b) des installations de modulation pour moduler les signaux porteurs (TX1, TX2,...) dans l'une de deux directions de polarisation orthogonales,
c) un dispositif de couplage pour combiner les composants des signaux porteurs (TX1, TX2,...) à direction de polarisation non modulée, avec le signal porteur de référence (LO).

4. Dispositif selon la revendication 3,
caractérisé en ce que
le montage de couplage est en outre conçu pour réaliser une superposition combinée des composants des signaux porteurs (TX1, TX2,...) selon la direction de polarisation modulée, avec le signal porteur de référence (LO) et des moyens pour relier l'installation de couplage à une sortie.

5. Dispositif selon la revendication 3 ou 4,
caractérisé par
un modulateur de phase ou d'amplitude auquel est associé un seul guide d'onde ou un chemin optique pour transmettre des signaux porteurs optiques (TX1, TX2,...) avec le signal porteur de référence (LO), le montage étant tel que les signaux porteurs (TX1, TX2,...) sont polarisés perpendiculairement au signal porteur de référence (LO).

6. Dispositif selon l'une des revendications 3 à 5,
caractérisé par
une installation pour générer un champ de commande électrique vertical dans une plaquette selon une orientation cristallographique 〈001〉 d'un guide d'onde pour moduler une onde à polarisation électrique transversale (TE) par effet électro-optique (τ41).

7. Dispositif selon l'une des revendications 3 à 6,
caractérisé en ce qu'
au guide d'onde, on associe une installation pour générer le signal porteur de référence optique (LO) avec des composantes dans les deux directions de polarisation.

8. Dispositif selon l'une des revendications 3 à 7,
caractérisé en ce que
le guide d'onde comporte une sortie d'antenne munie en option d'une sortie symétrique pour un récepteur a double détecteur.

9. Dispositif selon l'une des revendications 3 à 8,
caractérisé en ce que
le dispositif est un réseau avec un circuit optique intégré formé de LiNbO₃, GaAs ou InP, et la double réfraction de la matière de base est égale à zéro.

10. Dispositif selon l'une des revendications 3 à 9,
caractérisé en ce que
le coupleur comprend un découpleur directionnel en forme de diviseur de faisceaux le cas échéant avec un revêtement métallique asymétrique.

11. Dispositif selon l'une des revendications 3 à 10,
caractérisé en ce que
pour générer une rotation des polarisations du signal entre l'installation de modulation à l'entrée du réseau et le réseau, on a une fibre de liaison ou une installation de rotation de polarisation.
